# EUROPEAN PATENT SPECIFICATION

(11) **EP 0 418 895 B1**
(45) Date of publication and mention of the grant of the patent: **06.08.1997**
(21) Application number: 90118134.7
(22) Date of filing: 20.09.1990
(51) Int. Cl.: G06T 11/40

(54) **Method of and apparatus for processing image having a plurality of image areas**
Verfahren und Gerät zur Verarbeitung eines Bildes mit mehreren Gebieten
Méthode et appareil de traitement d'une image ayant plusieurs zones

(30) Priority: 21.09.1989 JP 245985/89; 08.01.1990 JP 2175/90
(43) Date of publication of application: 27.03.1991
(73) Proprietor: Dainippon Screen Mfg. Co., Ltd., Kamikyo-ku Kyoto 602 (JP)
(72) Inventor: Kitamura, Hideaki, Dainippon Screen Mfg. Co., Ltd., Horikawa-dori, Kamikyo-ku, Kyoto (JP); Yamaguchi, Katsuya, Dainippon Screen Mfg. Co. Ltd., Horikawa-dori, Kamikyo-ku, Kyoto (JP); Shibazaki, Hiroshi, Dainippon Screen Mfg. Co. Ltd., Horikawa-dori, Kamikyo-ku, Kyoto (JP)
(74) Representative: Goddar, Heinz J., Dr.

(56) References cited:
- EP-A- 0 278 528
- EP-A- 0 280 320
- NEWMAN W. M. and SPROULL R. F. : "Principles of Interactive Computer Graphics", McGraw-Hill, 1979; Chapters 10 "Picture Structure" and 17 "Interactive Raster Graphics"

## Description

### BACKGROUND OF THE INVENTION

### Field of the Invention

The present invention relates to a method of and an apparatus for selectively performing an image processing such as coloring on part of an image including letters and graphics.

### Description of Prior Art

In a printing process for catalogues of commodities or leaflets, image processing is often carried out in order to allocate various colors to the letters and the graphics within the image or to thicken the letters. Prior to such image processing, designated letters, illustrations, logos and graphics are arranged at first on a base sheet to make the layout copy and the sheet is read by an image reader to obtain a binary image. Then the processing including the coloring is selectively made to part of the binary image, e.g., areas occupied by the letters or the graphics.

However, in the case there are a lot of areas to which the image processing such as coloring is applied (hereinafter called "designated areas"), complicated work and long time are required since an operator has to determine the designated areas one by one.

In the document "W.M. SPROULL et al. "Principles of Interactive Computer Graphics", McGRAWHILL, 1979; Chapters 10 "Picture Structure", 12 "Graphical Input Techniques" and 17 "Interactive Raster Graphics" a method is described wherein the designation of areas can be performed by application of graphical means on a computer screen. The areas to be determined or designated can therefore be selected in a convenient way. However, the problem remains that even with the mentioned method areas have to be selected one by one which can be rather time consuming in case of complicated images.

### SUMMARY OF THE INVENTION

The present invention is directed to a method of selectively applying a predetermined image processing to respective areas of an image.

According to the present invention, the method comprises the steps of; (a) defining the respective areas on the image and providing initial colors to the respective areas; (b) displaying the image on a display means; (c) designating one of the initial colors as an objective initial colors; (d) arbitrarily designating a graphic on the image displayed, the graphic being a one-dimensional or two-dimensional graphic; (e) determining, among the respective areas, areas which overlap with the graphic to obtain objective areas and which has the objective initial color; and (f) applying the image processing to areas-to-be-processed which are either of the objective areas or areas other than the objective areas.

In an aspect of the present invention, the step (f) includes the steps of; (f-1) designating a color; and (f-2) providing the color to the areas-to-be-processed. The steps (d) through (f) are repeated while changing a position of the graphic on the image and changing the color, to thereby allocate a plurality of colors to the respective areas.

In another aspect of the present invention, the step (f) includes the step of; (f-1) extracting the areas-to-be-processed from the respective areas to thereby obtain an extracted image. The steps (c) through (f) are repeated while changing a position of the graphic on the image to thereby obtain a plurality of extracted images. The plurality of the extracted images are combined with each other to obtain a combined extracted image.

The present invention is also directed to an apparatus for selectively applying a predetermined image processing to respective areas of an image, the respective areas being provided with initial colors. According to the present invention, the apparatus comprises (a) means for displaying the image; (b) means for inputting positional data representing a designated position on said image; c) means for designating one of said initial colors as an objective initial color; (d) means for generating a one-dimensional or two-dimensional graphic at the position on the image, (e) means for, among the respective areas, detecting objective areas which overlap with the graphic and have a designated initial color; and (f) means for applying the image processing to areas-to-be-processed which are either of the objective areas or areas other than the designated areas. In the present invention, the word "color" is terminology wide in meanings including white and black.

Accordingly, an object of the present invention is to selectively process respective areas in an image at a high speed.

Another object is to allocate colors to respective image areas at a high speed.

Further another object is to extract closed areas from an image at a high speed.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a block diagram showing the construction of an image processor according to a first preferred embodiment of the present invention;
Fig. 2 is a flow chart showing the procedures according to the first preferred embodiment of the present invention;
Figs. 3A-3F are explanations showing the details of the processing;
Fig. 4A and Fig. 4B are explanations showing the composition of run length data;
Fig. 5 is a plan view showing the processing window for area dividing processing;
Figs. 6A-6E are explanations showing the procedures in the area dividing processing;
Fig. 7 is a plan view showing the crossing points between a segment and black areas;
Figs. 8A-8C, 9A-9D and 10 are explanations showing the processing examples for other images;
Fig. 11 is a block diagram showing the construction of an image processor according to a second preferred embodiment of the present invention;
Fig. 12 is a flow chart showing the procedures of the second preferred embodiment of the present invention;
Figs. 13A-13E are explanations showing the processing details in the second preferred embodiment;
Figs. 14A-14H are explanations showing other processing according to the second preferred embodiment; and
Fig. 15 is a plan view showing a rectangle as a designation graphic.

### DESCRIPTION OF THE PREFERRED EMBODIMENTS

### A. Construction of Image Processor

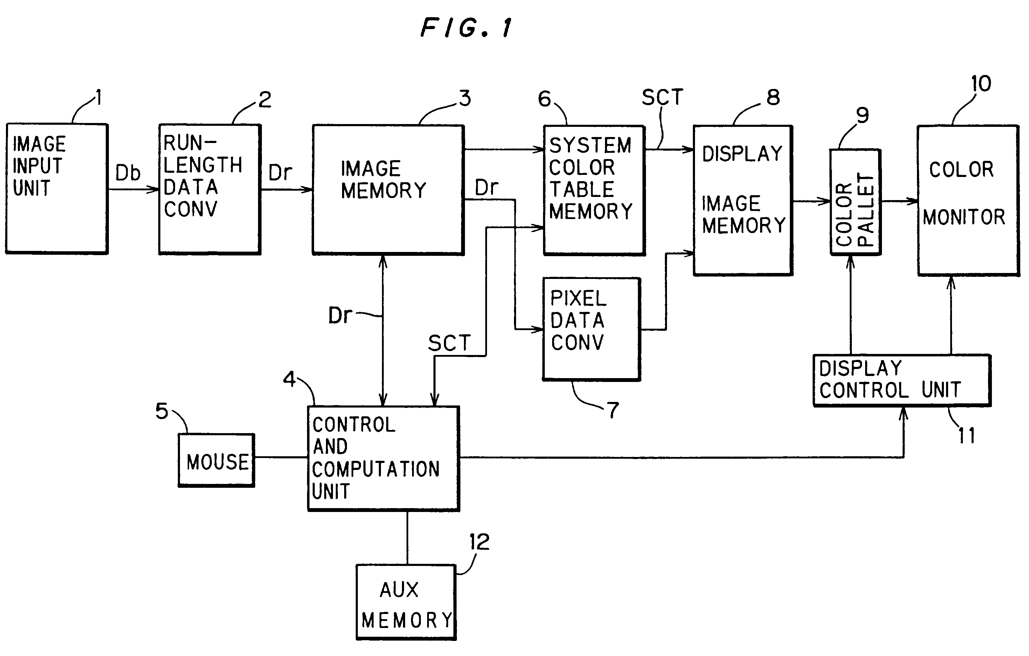

Fig. 1 is a block digram showing an image processor according to a preferred embodiment of the present invention, which is employable in coloring respective areas on an image. The image processor comprises the following elements:
(a) Image input unit 1; to read a layout copy made on a base sheet to obtain a binary image, which may include a flat type scanner.
(b) Run length data converter 2; to convert into run length data the binary image data for each pixel which the image input unit 1 generates.
(c) Image memory 3; to store the image data expressed in the form of the run length data.
(d) Control and computation unit 4; to control the image processor and to carry out predetermined computation.
(e) Mouse 5; used by an operator to designate areas on the image and to input other instructions. A stylus pen, etc. is available instead of the mouse.
(f) System color table memory 6; to store data expressing respective colors of closed areas defined on the image, details of which is described later.
(g) Pixel data converter 7; to convert the run length data into the image data of respective pixels.
(h) Display image memory 8; to store image data of an image to be displayed on a color monitor.
(i) Color pallet 9; to transform into color component density signals of R (red), G (green) and B (blue), color numbers included in the image data supplied form the display image memory 8.
(j) Color monitor CRT 10, to display color images.
(k) Display control unit 11; to control the display of color image on the color monitor 10.
(l) Auxiliary memory 12; to temporarily store the coordinate values of intersecting points.

### B. Procedure of Coloring

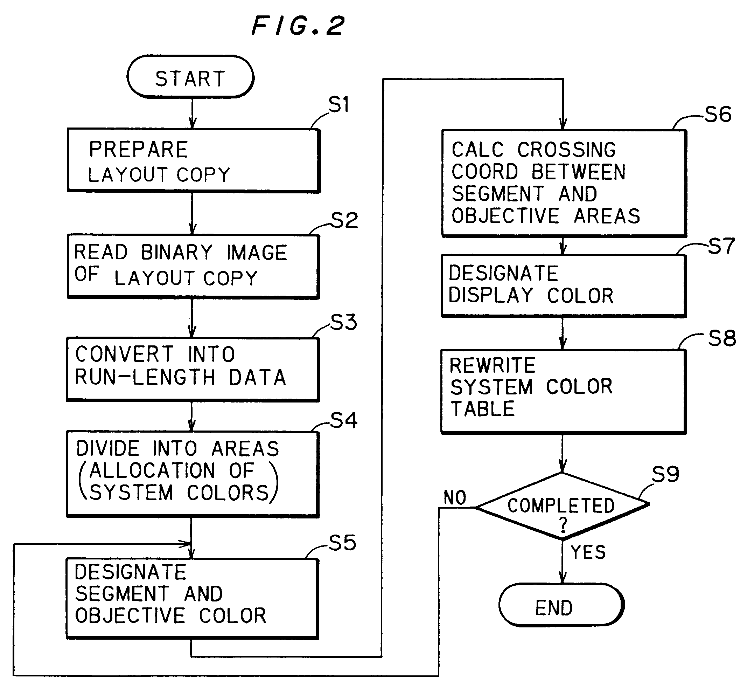

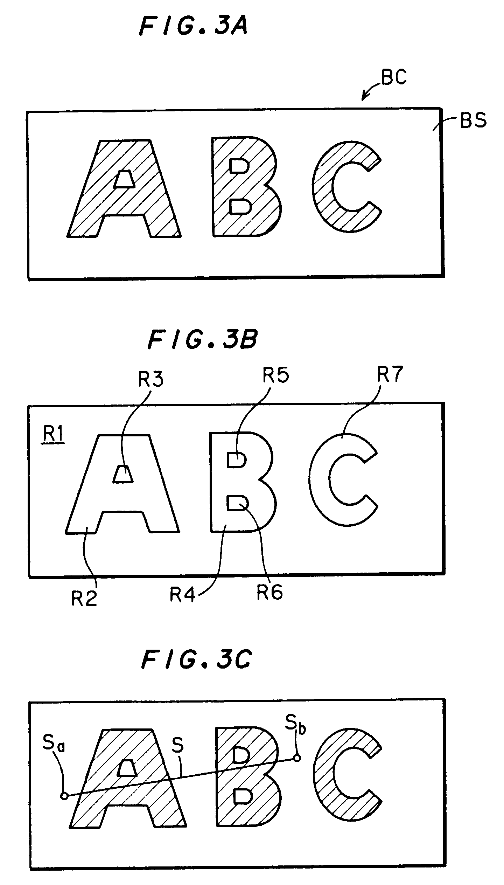

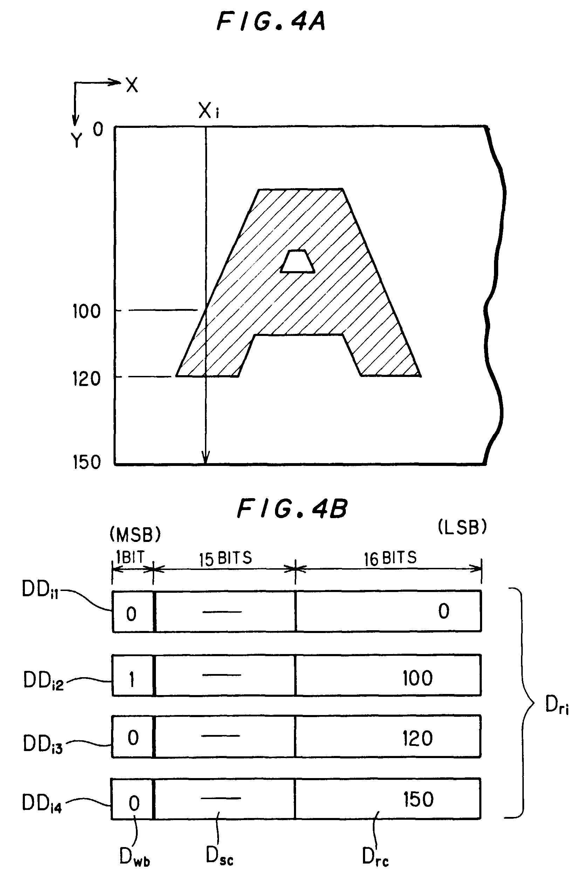

Fig. 2 is a flow chart showing the procedure of coloring according to the preferred embodiment of the present invention. The coloring is an operation to uniformly fill designated areas with specified colors. In the process step S1, a layout copy is prepared by arranging letters and graphics on a base sheet at first. Fig. 3A is a plan view showing an example of the layout copy BC. On the base sheet BS, letters A, B and C are depicted in black to prepare the layout copy. In the process step S2, the layout copy BC is photoelectrically read by the image input unit 1, whereby binary image data D_{b} is obtained from the layout copy BC. The binary image data D_{b} expresses whether each pixel within the image is black or white. In the next process step S3, the binary image data D_{b} is supplied from the image input unit 1 to the run length transformer 2 to be transformed into run length data Dᵣ. Fig. 4A and Fig. 4B are explanation to show the composition of the run length data Dᵣ. Fig. 4A shows an enlarged view of the letter A portion of the layout copy image, in which a vertical and a horizontal directions are assumed as a main scanning and a subscanning directions Y and X, respectively. In addition, the range of the main scanning coordinate Y on the base sheet is assumed as falling between 0 to 150. Fig. 4B shows the run length data Dᵣᵢ for the subscanning coordinate xᵢ on the layout copy image. The run length data Dᵣᵢ are composed of four consecutive data DDᵢ₁-DDᵢ₄ (hereinafter called "unit run length data"). Each of the unit run length data DDi₁-DDᵢ₄ is of 32 bits, the most significant bit being white-black specifying data D_{wb} to express whether the corresponding unit run length data expresses white or black, the following 15 bits being system color data D_{sc} to express the number of a system color described later and the less significant 16 bits being coordinate data D_{rc} to express the main scanning coordinate of a starting point of the corresponding unit run length. Upon the subscanning coordinate xᵢ, the main scanning coordinates y from 0 through 99 are for white, ones from 100 through 119 are for black and ones from 120 through 150 are for white. Three unit run length data DDᵢ₁-DDᵢ₃ express the main scanning coordinates of the starting points for the above three sections and their colors white or black. The value of the main scanning coordinate of the fourth unit run length data DDᵢ₄ is the maximum one (= 150), expressing termination of the run length data on the main scanning line. Upon this time, as the system color is not specified, the system color data D_{sc} in the run length data are left meaningless. The run length data Dᵣ thus obtained is supplied to the image memory 3 from the run length transformer to be stored therein. In the process step step S4, based on the above run length data Dᵣ, the control and computation unit 4 carries out area division processing on the layout copy image into closed areas. The area division processing refers to one to discriminate within the layout copy image respective areas each separated by boundary lines between the black and the white areas and to allocate to each area different numbers Nₛ (system color number). Fig. 3B shows areas R1-R7 separated from each other. For example, the system color numbers Nₛ = 1-7 are given to respective areas R1-R7. The reason why the numbers allocated to respective areas are called system color numbers is that the numbers are given automatically by the control and computation unit or system 4 and can be used as ones also expressing colors. For instance, when the layout copy image is displayed on the color monitor 10 respective areas R1-R7 can be displayed in different colors by allocating respective system color numbers Nₛ to different colors.

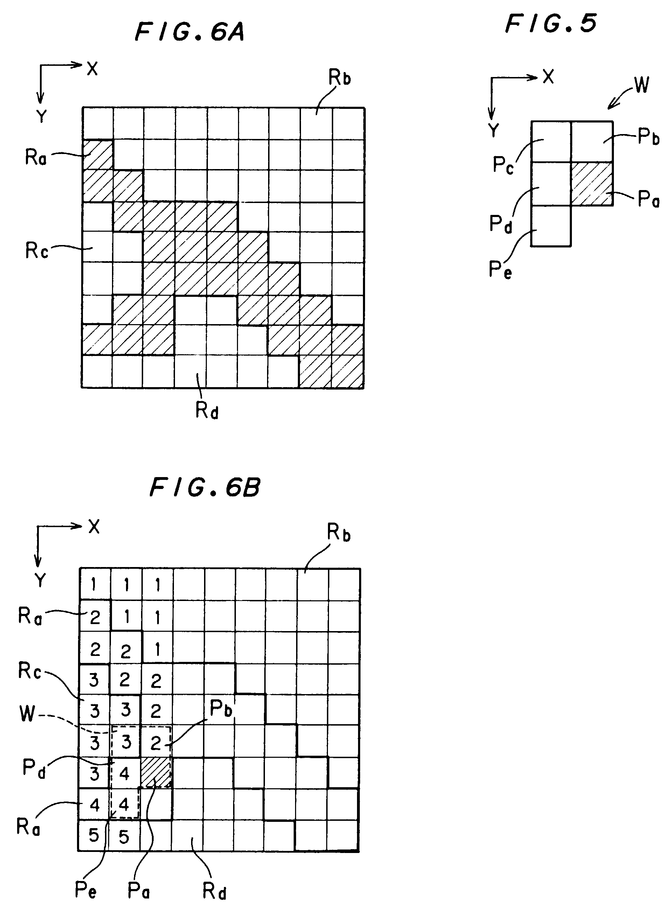

The area division processing is for example carried out as follows. Fig. 5 shows a processing window in used for the area division processing. The pixels Pₐ with a hatched portion is an objective pixel, other pixel P_{b}-Pₑ showing ones partially surrounding the pixel Pₐ. This processing window W is moved in sequence along the main scanning direction Y in an ascent order of the subscanning coordinate X. If the pixel Pₐ is black and all of the surrounding pixels P_{b}-Pₑ are white pixels, a new system color number Nₛ is allocated to the pixel Pₐ. On the other hand, if at least one of the surrounding pixels P_{b}-Pₑ is a black one, the system color number Nₛ already allocated to the surrounding black pixels is given to the pixel Pₐ as the system color number Nₛ of the pixel Pₐ. The same is true in the case where the objective pixel Pₐ is white. However, in this case, when only the pixels P_{c} and Pₑ adjoining the pixel Pₐ in a skew direction are white, a system number Nₛ which is different from those for the pixels P_{c} and Pₑ is allocated to the objective pixel Pₐ. In this way, when the white pixels adjoin the objective white pixel Pₐ only in a skew direction, it is recognized that these pixels belong to different areas, whereby undesirable area division to cross the monoblack and monowhite areas can be avoided.

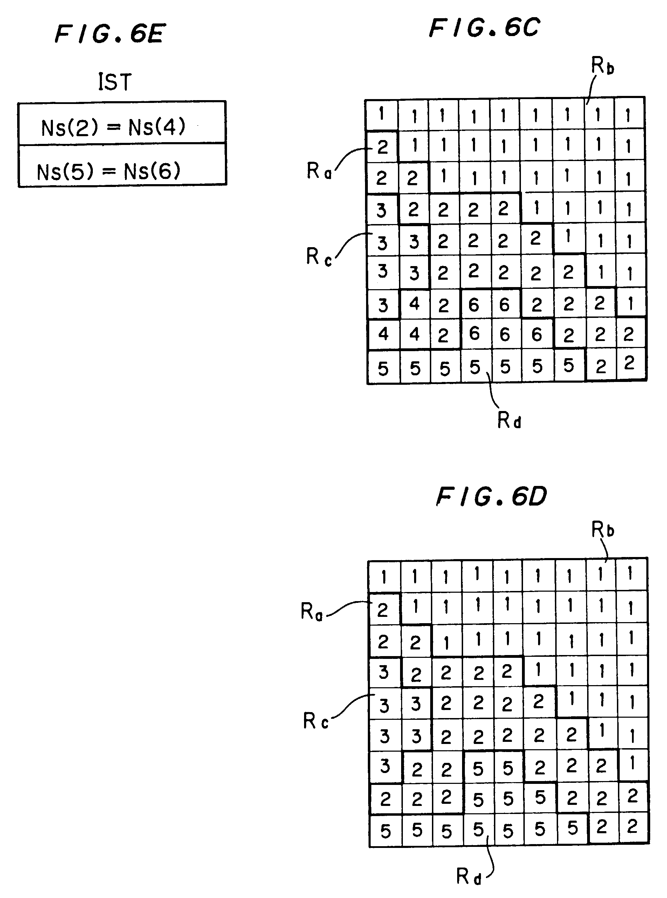

In the course of moving the processing window W and giving the different system color numbers in sequence to the different areas, there sometimes arise the cases in which two or more system color numbers Nₛ are given to the same area. Fig. 6A and Fig. 6E are explanations showing the processing in such cases. It is assumed that, as shown in Fig. 6A, the layout copy image is composed of the black area Rₐ and three white areas R_{b}, R_{c} and R_{d} separated by the area Rₐ.

When the processing window W is moved in sequence along the main scanning direction Y in an ascent order of the subscanning coordinate X, different system color numbers Nₛ are allocated to the respective areas Rₐ-R_{d}. In Fig. 6B, numerals in respective pixels show the system color numbers Nₛ allocated to the pixels. The pixels not filled with the numerals show that the system color numbers Nₛ have not been allocated yet. As shown in Fig. 6B, pixels allocated with the system color number Nₛ = 2 and those with the system color number Nₛ = 4 exist in the black area R. When the processing window W comes to the position shown in Fig. 6B, among the pixels adjoining to the objective pixel Pₐ, the pixel P_{b} has the system color number Nₛ = 2 and the pixels P_{d} and Pₑ have the number Nₛ = 4. In this case, an information expressing "the system color numbers Nₛ = 2 and Nₛ = 4 represent a system color" is temporarily stored in the auxiliary memory 12 and Nₛ = 2 which is the smaller one among the two system color numbers is given to the objective pixel Pₐ. If this is carried out for the whole pixels in Fig. 6A, the system color image shown in Fig. 6C and an identical system color table IST shown in Fig. 6E are obtained. Respective pixels in the system color image are filled with system colors, the identical system color table IST represents that the system color numbers Nₛ =2 and Nₛ=4 express a same system color (that is, the numbers Nₛ = 2 and Nₛ = 4 are allocated to pixels in the same image area) and Nₛ =5 and Nₛ=6 express another same system color. The identical system color table IST is stored in the auxiliary memory 12.

Then with reference to the identical system color table IST stored in the auxiliary memory 12, a common system color number (for example, the least one of the system color numbers in each row of the table IST) is re-assigned to the pixels which belong to a same image area in the image shown in Fig. 6C and to which different color numbers have been allocated. As a result, the image as shown in Fig. 6D is obtained, in which all areas Rₐ-R_{d} are allocated with respective different color numbers Nₛ.

Although the processing is conducted on respective pixels according to the preferred embodiment, the same may be conducted on the image data compressed in the run length as shown in Fig. 4A and Fig. 4B.

In this way, the respective areas R₁-R₇ of the layout copy image in Fig. 3A are identified and the same system color number Nₛ is allocated to the pixels in the same area. For example, the system color numbers Nₛ = 1-7 are allocated to the respective areas in sequence.

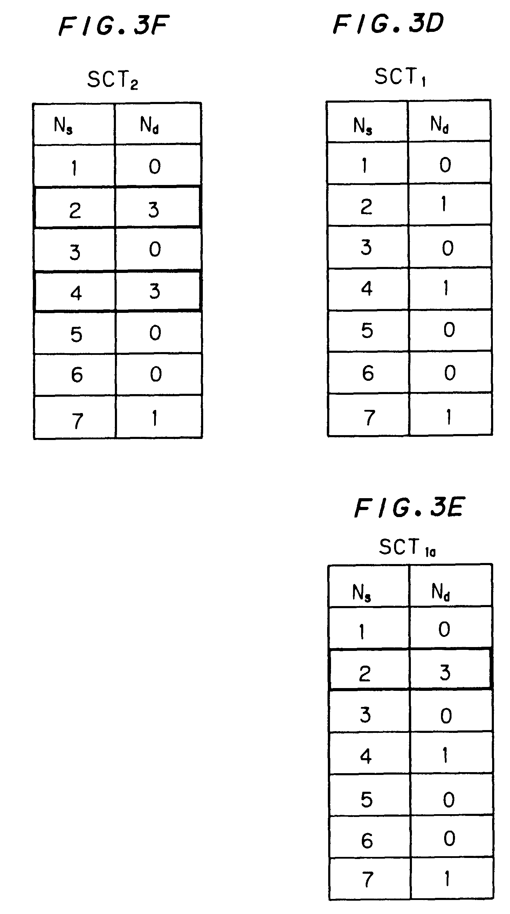

The system color numbers Nₛ thus obtained are given to the system color data D_{sc} within the run length data Dᵣ (Fig. 4B). Then the run length data Dᵣ is supplied to and stored in the image memory 3. The control and computation unit 4 generates a system color table expressing correspondence between the system color numbers Nₛ and display colors (black or white in this case) to store the same in the system color table memory 6. Fig. 3D shows the system color table SCT₁. The system color table SCT₁ is composed of the system color number Nₛ and the display color numbers N_{d}. N_{d}=0 shows white, while N_{d}=1 shows black. In the process step S5, an operator designates a segment S on the layout copy image in order to specify objective areas, in which the segment S is "a designation graphic". More particularly, the layout copy image is displayed on the color monitor 10 for a start. Since the display color numbers N_{d} on the system color table SCT₁ are only those corresponding to black (N_{d}=1) and white (N_{d}=0) as shown in Fig. 3D, the layout copy image is displayed as a monochromatic image. Alternatively, the image may be displayed chromatically with the system color numbers Nₛ. Watching the color monitor 10, the operator designates the positions of the end points Sₐ and S_{b} of the segment S with the mouse 5. Fig. 3C shows the state in which the layout copy image and the segment S are displayed on the color monitor 10. In Fig. 3C, the end points Sₐ and S_{b} are expressed with hollow circles, but in actuality, they may be expressed with a symbol "x".

The operator designates the end points Sₐ and S_{b} along with designating that the objective areas are black areas. This is made for example by choosing "black" with the mouse 5 within a menu for selecting either of white or black, which are displayed on the color monitor 10. As a result, among seven areas R1-R7 in the layout copy image, the areas R2 and R4 falling in black areas R2, R4 and R7 as well as crossing with the segment S are designated to be objective.

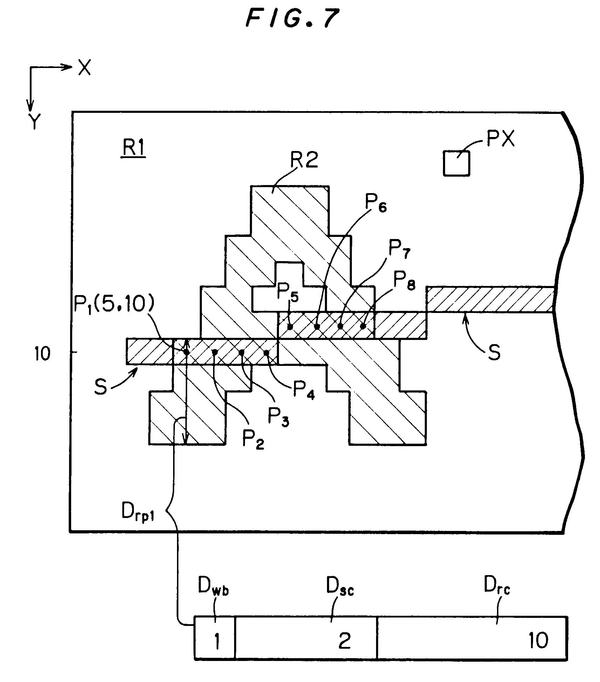

In the process step S6, the control and computation unit 4 computes the coordinates of the crossing points between the segment S and the black areas among the areas R1-R7. Fig. 7 shows the enlarged part of the letter A in Fig. 3C, where each pixel PX is represented by a square. The segment S intersects with the letter A at eight crossing points P₁-P₈. The control and computation unit 4 computes the coordinate values of the crossing points P₁-P₈ to store the same in the auxiliary memory 12.

In the process step S7, the operator designates a display color (for example red) to uniformly fill out the designated areas (R2 and R4). This may be carried out by displaying on the color monitor 10 a display color menu and selecting one of the display colors within the display color menu.

In the next process step S8, the control and computation unit 4 rewrites the corresponding display color numbers N_{d} in the system color table memory SCT₁ stored in the system color table memory 6. More particularly, the control and computation unit 4 reads out of the image memory 3 the unit run length data Dᵣₚₗ including the crossing point P₁. The unit run length data Dᵣₚₗ including the crossing point P₁ is shown at the bottom of Fig. 7. As the crossing point P₁ belongs to the area R₂, the value of the system color data D_{sc} within the unit run length data Dᵣₚₗ is "2". The control and computation unit 4 rewrites the system color table SCT₁ (Fig. 3D), based on the value "2" of this system color data D_{sc} and the display color number N_{d} (here, N_{d}=3 assumed) corresponding to the display color (red) designated upon the process step S7. That is, the value of the display color number N_{d} = 1 corresponding to the system color number Nₛ =2 to "3". Fig. 3E shows the system color table SCT₁ₐ thus rewritten. The same processing as above is repeated for the crossing points P₂-P₈ and also for the crossing points between the segments S and the letter B. As a result, the system color table SCT₂ shown in Fig. 3F is obtained, in which the display color number N_{d} in the areas R₂ (Nₛ=2) and R₄ (Nₛ=4) is rewritten to the display color number N_{d}=3 expressing the red. The system color table SCT₂ thus rewritten is stored in the system color table memory 6. In the process step S9, it is judged whether there are other areas to be colored or not. If any, the process returns to the process step S5. If not, the process is completed.

Now, the process of coloring the letters A and B with red on the layout copy image finishes. The operator can designate simply the end points Sₐ and S_{b} of the S passing through the areas R2 and R4 upon designating the areas R2 and R4 corresponding to the letters A and B. Further, there is an advantage that, even if letters and graphics are arranged in the direction inclined from the scanning directions, the segment S can simply be designated along the objective areas to specify the objective areas.

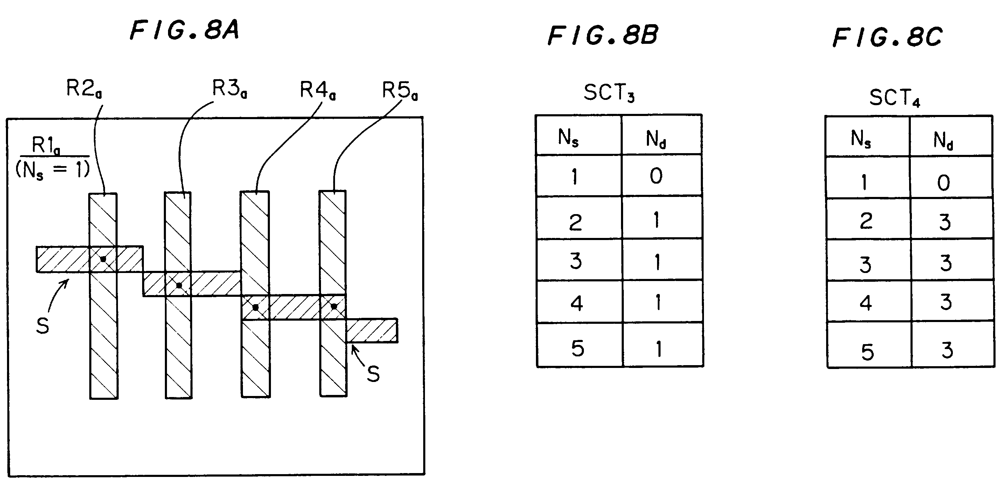

In the processing to rewrite the system color table upon the process step S8, even if only the crossing points P₂-P₈ among eight crossing points P₁-P₈ between the segment S and the letter A (the area R2) are subjected to the process, the system color table shown in Fig. 3E is also obtained. This is because the crossing points P₂-P₈ are in the same area R₂ as the point P₁. It is taught from this example that the processing of the process step S8 need not be carried out on the whole crossing points between the segment S and objective black areas. In the case where the minimum width of the image areas within the layout copy image is known, the process step S8 may be carried out by inputting with a keyboard (not shown) the minimum width of the image areas and selecting the crossing points one by one for every minimum width of the image areas. For example, if the minimum width of the image areas is the width for two pixels, the processing of the process step S8 may be carried out for the crossing points P₁, P₃, P₅ and P₇ for the case shown in Fig. 7. However, in the case where the width of the black areas R2ₐ -R5ₐ is of one pixel as the layout copy image shown in Fig. 8A, the processing of the process step S8 is needed for all the crossing points between R2ₐ-R5ₐ and the segment S. Fig. 8B shows the system color table SCT₃ before rewriting to the layout copy shown in Fig. 8A, Fig. 8C showing the system color table SCT₄ after the rewriting.

In another modification for further simplifying the process, not only the coordinate values of the crossing points P₁-P₈ obtained in the process step S6 but also the system color numbers corresponding to the crossing points P₁-P₈ are stored in the auxiliary memory 12. After storing all the crossing points, the crossing points having a same system color number are deleted with only one crossing point coordinate value left (for example, in Fig. 7, only P₁ is left and P₂-P₈ are deleted). Through this process, only one coordinate value remains for each objective area to which one system color number is given, so that processing efficiency is improved.

Colored images are displayed on the color monitor 10 as follows. For a start, the run length data Dᵣ stored in the image memory 3 are given to the pixel data transformer 7 to be transformed to the image data for each pixel. Since the run length data Dᵣ contain no more than the system color data D_{sc} (refer to Fig. 4B) as data to express colors, the transformed image data also contain the system color data, i.e., system color numbers, as the data to express colors. Those color data is given to the display image memory 8 from the pixel data transformer 7. On the other hand, the contents of the system color table memory SCT are given to the display image memory 8 from the system color table memory 6. That is, the data showing correspondence between the system color number Nₛ and the display color number N_{d} is transmitted to the display image memory 8. As a result, the image data expressing the display color number N_{d} is stored in the display image memory 8 for each pixel. When the image data stored in the display image memory 8 is delivered to the color pallet 9, the pallet 9 generates respective color signals R, G and B for each pixel for expressing the color corresponding to the display color number N_{d} to supply them to the color monitor 10. As a result, the image in which respective areas are allocated with the colors expressed by the display color numbers N_{d} is displayed on the color monitor 10.

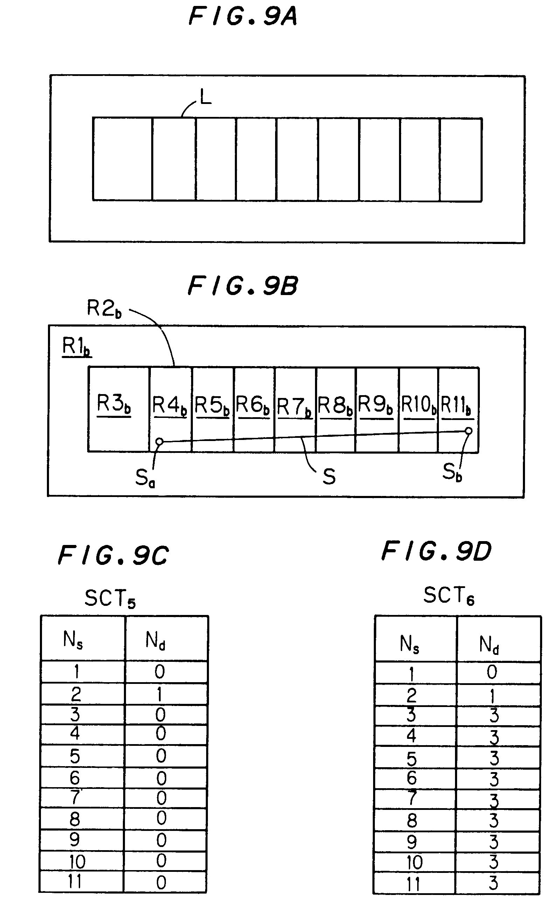

Figs. 9A-9E are explanations to show the coloring process applied to an image having a table defined by keylines. The layout copy image shown in Fig. 9A is an image in which black lines L are depicted on the white ground. Through the area-division process, the layout copy image is divided into eleven areas R1_{b}-R11_{b} as shown in Fig. 9B. The area R2_{b} corresponds to all the keylines L. Fig. 9C shows the system color table SCT₃ obtained through the area division processing. The system color numbers N_{d} = 1-11 are allocated to the areas R1_{b} -R11_{b}.

Suppose the case where the white areas R4_{b} -R11_{b} is to be converted to red. In this case, in the process step S5, the end points Sₐ and S_{b} of the segment S are designated so that they come to the inside of respective objective areas R4_{b} and R11_{b}, respectively, and the white areas are designated to be objective. Through these process steps, the areas R4_{b}-R11_{b} are designated to be objective areas. The other process steps are carried out similarly as above. As a result, as shown in Fig. 9D, the system color table SCT₆ is obtained, in which the display color number N_{d} for the areas R4_{b}-R11_{b} is rewritten into the value "3" expressing the red.

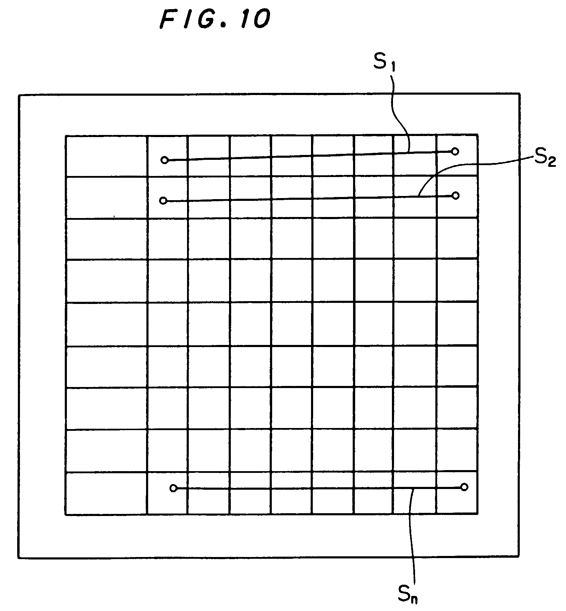

Fig. 10 shows a layout copy image having a table of n rows, where n is a positive integer. Respective rows in the table can be filled with different colors by simply designating segments S₁-Sₙ passing through respective row areas to be allocated with the different display colors.

### C. Extraction of Image Areas

Next, a process of extracting designated areas from a layout copy image according to another preferred embodiment of the present invention will be described. The image extracting processing is used for removing minute pinholes contained in the layout copy image and the like. The image extracting processing can be thought as one example to uniformly fill the areas other than the designated ones with specified color (here, white). Or it can also be thought as one example to extract partial images containing only the designated areas as the substantial images.

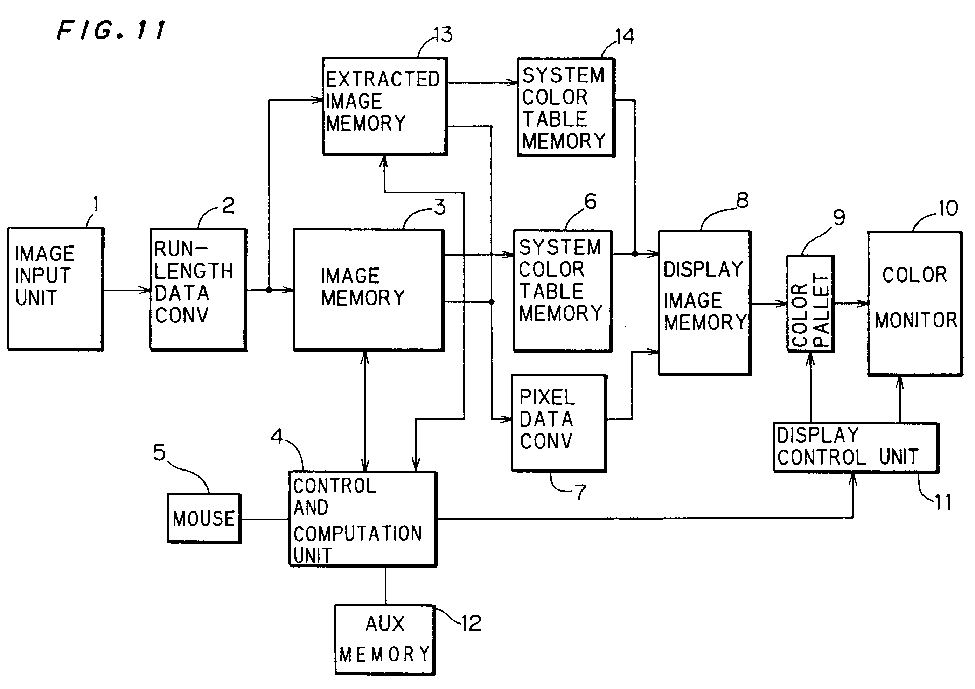

Fig. 11 is a block diagram showing the construction of an image processor used for the image extracting processing. The image processor in Fig. 11 is with the construction in which an extracted image memory 13 and a system color table memory 14 are added to the image processor in Fig. 1. The extracted image memory 13 is a memory to store the run length data of the extracted image. The system color table memory 14 is one to store the system color table for the extracted image.

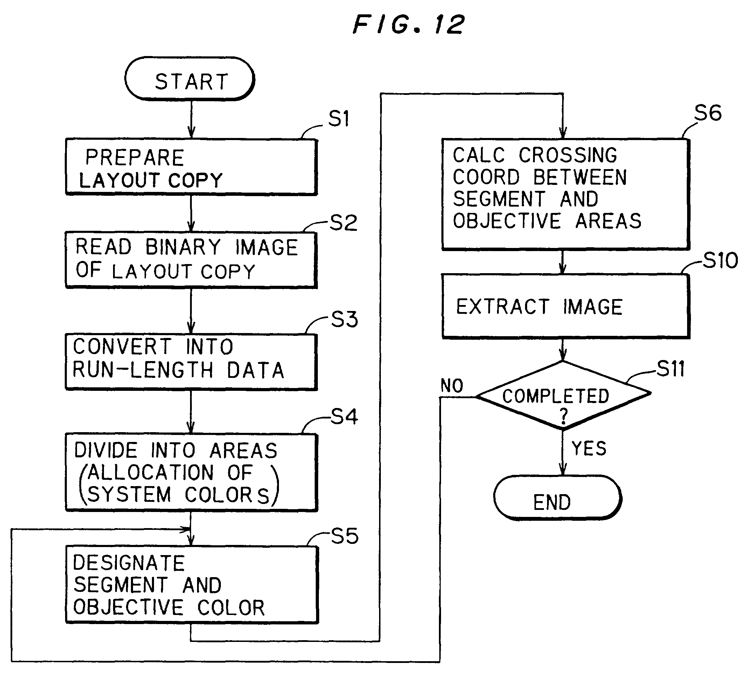

Fig. 12 is a flow chart to show the procedure of the image extracting processing. The process steps S1-S6 are the same ones as those of the coloring processing in Fig. 2.

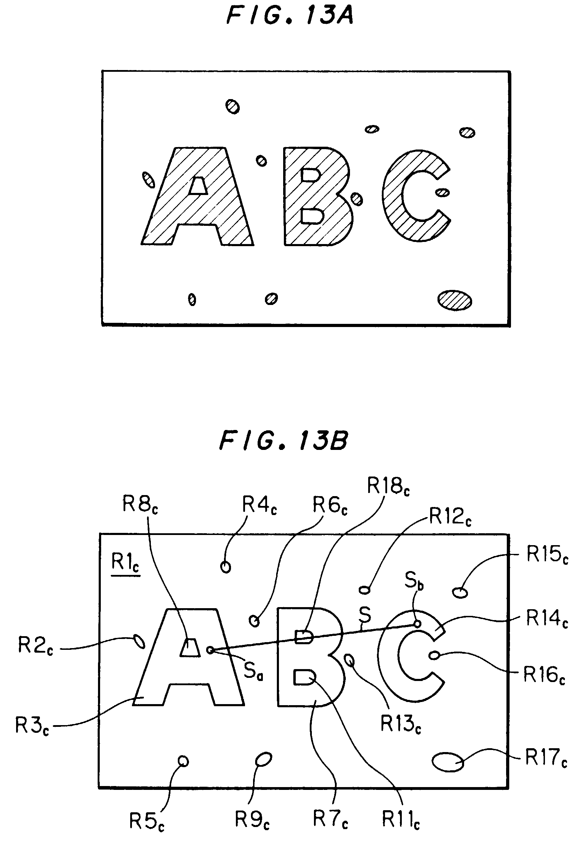

Fig. 13A is a plan view to show the layout copy image which is read in the process step S2. On this layout copy image, many minute black pinholes are contained other than the letters A, B and C. The run length data of this layout copy image are stored in the image memory 3. By extracting only the image of the black areas or letters A, B and C, the pinholes can be removed from the layout copy image.

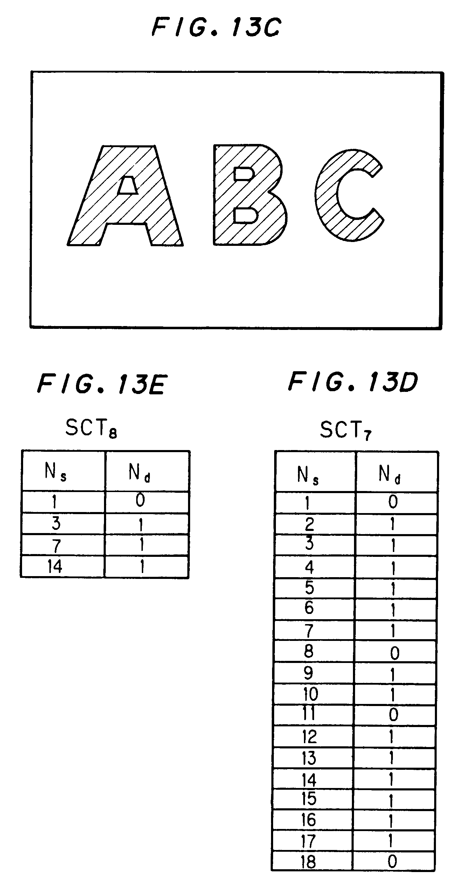

Fig. 13B shows the layout copy image divided into seventeen pieces of the areas in the process step S4. The white ground corresponds to an area R1_{c}, and the letters A, B and C or the black areas corresponding to areas R3_{c}, R7_{c} and R14_{c}, respectively. Each pinhole is recognized as an individual area. Fig. 13D shows a system color table SCT₇ obtained through the area division in the process step S4. The areas R1_{c}-R18_{c} are allocated with the values of the system color numbers Nₛ = 1-18, respectively. The value of the display color number Nₛ of the ground area R1_{c} is 0 (white), while the value of the display color number Nₛ of the other areas is "1" (black).

Only the image of the areas R_{3c}, R_{7c} and R14_{c} corresponding to the black areas or the letters A, B and C can be extracted by designating the segment S in the process step S5 such that the segment S passes through the inside of the areas R3_{c}, R7_{c} and R14_{c} and not through the pinhole areas. Such a segment S is depicted in Fig. 13B.

In the process the step S6, the coordinate values of the crossing points between the segment S and the designated areas are computed like the color allocation process.

In the next process step S10, the extraction of an image is carried out. To begin with, only the unit run length data including the crossing points obainted in the process step S6 is selected among the run length data for the layout copy image stored in the image memory 3. Then the unit run length data other than the selected unit run length data are corrected to all express the white areas. That is, the values of the black/white designation data D_{wb} included in the unit run length data is forced to "0". Besides, the value of the system color data D_{sc} included in the unit run length data is forced to "1", which is the same value of the system color data as the white ground. When two or more unit run length data expressing white become adjacent to each other, they may be united to one unit run length data. The above processing is carried out by the control and computation unit 4.

The run length data thus corrected express, as shown in Fig. 13C, the extracted image including the white ground and the black letters A, B and C without the pinholes. The corrected run length data is supplied to the extracted image memory 13 from the control and computation unit 4 and stored therein. In addition, based on the corrected run length data, a system color table is generated for the extracted image. Fig. 13E shows the system color table SCT₈ of the extracted image. This system color table SCT₈ is stored in the system color table memory 14.

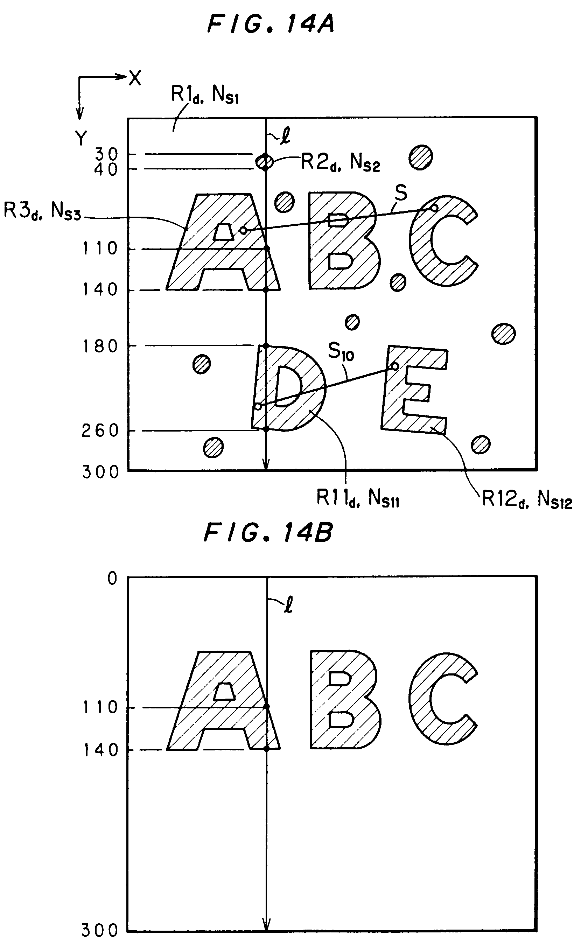

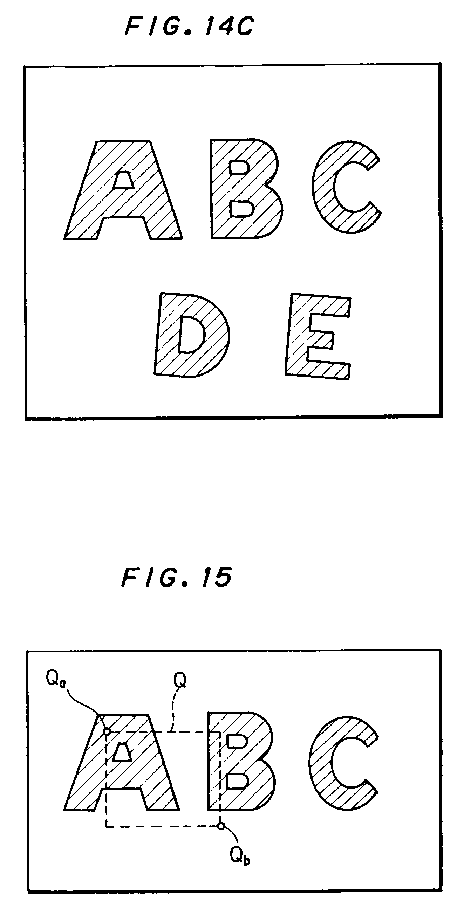

Upon an example of Fig. 13B, only the image data of the system color numbers R3_{c} R7_{c} and R14_{c} are extracted and written into the extracted image memory in the form of the run length data. In this writing processing, to make possible the repeated extraction processing in the process step S11, the image data existing on the extracted image memory 13 before the writing processing is conserved even after the writing processing. Figs. 14A-14H are explanations to show repeated extraction processing. For example, the initial layout copy image of Fig. 14A is stored in the image memory 13 and after the first extraction processing (processed through the steps S1-S10 in Fig. 12), the image of Fig. 14B is obtained on the extracted image memory 13. Then, going back to the process step S5, the extraction of the letters "DE" is instructed by designating another segment S₁₀, whereby a final extracted image is obtained as shown in Fig. 14C.

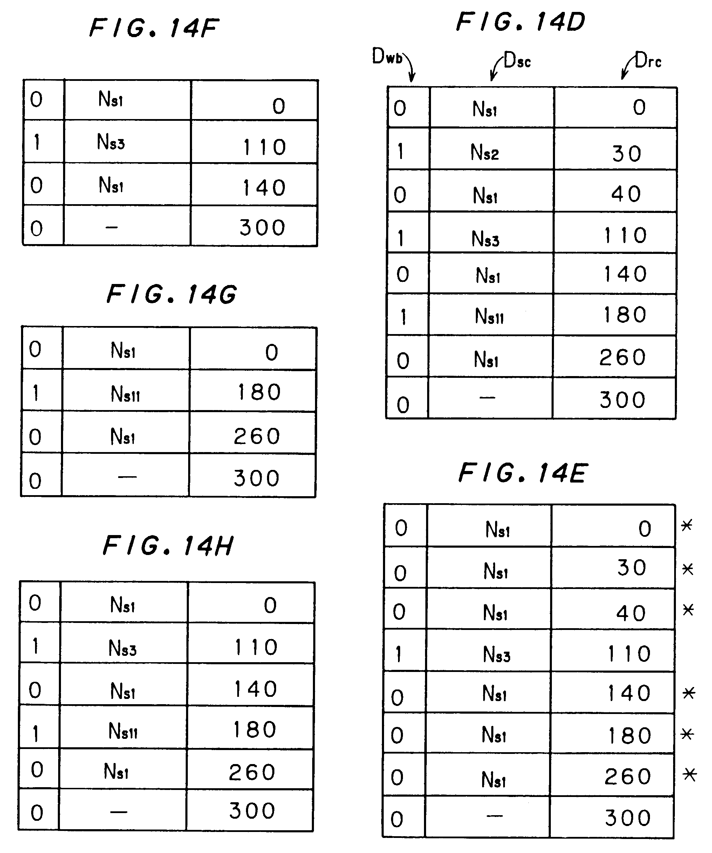

In order to make possible this repeated writing, the following method may be employed. The run length data on a main scanning line ℓ on the initial layout copy image (Fig. 4A) is shown in Fig. 14D. Since the main scanning line ℓ passes through the areas R1_{d}, R2_{d}, R3_{d} and R11_{d}, the run length data in Fig. 4D contain the system color numbers Nₛ₁, Nₛ₂, Nₛ₃ and Nₛ₁₁ of those areas as system color data D_{sc}.

Upon the first extraction processing to extract three letters A, B and C, only the area R3_{d} (the area of the letter A) is extracted among the areas through which the principal scanning line ℓ passes. As regards the run length data shown in Fig. 14D, upon the first extraction processing, the values of the system color numbers other than the objective system color number Nₛ₃ and the associated black/white designation data D_{wb} are made the same as the values of the "white" areas R1_{d} (Fig. 14E). Then the consecutive unit run length data expressing the white areas (the unit run length data with ∗ mark in Fig. 14E) are united to one unit run length data. This is based on the rule that a unit run length data is deleted if the unit run length data just follows another unit run length data having the same color. The result is shown in Fig. 14F. The extracted image corresponding to the corrected run length data is written in the extracted image memory 13 as shown in Fig. 14B.

Upon the second extraction processing to extract two letters D and E, the run length data on the main scanning line ℓ shown in Fig. 14D is corrected as shown in Fig. 14G. The first extracted image (a first partial image) composed of the letters A, B and C is added to the second extracted image (a second partial image) composed of the letters D and E in order to unify the first and second extracted images. This is carried out only by uniting the run length data in Fig. 14F and Fig. 14G. More particularly, the unification be carried out by only sorting in an ascent order the respective coordinate data D_{rc} included in those two run length data. As a result, the run length data shown in Fig. 14H is obtained. This processing is made along main scanning lines on the respective subscanning coordinates X, whereby the extracted image shown in Fig. 14C is finally obtained.

As mentioned above, since the image to be extracted is designated using the segment S, it is unnecessary to delete the individual pinholes one by one for their removal. Accordingly, there is an advantage that the pinhole removal can be carried out easily and at a high speed.

### D. Modification and Conclusion

(1) The processing which is conducted for the designated areas may be other image processing as well as the coloring and the image extraction. For example, thickening or thinning processing may be made to the areas designated with the segment S. The thickening processing refers for example to one to increase by a predetermined number of the pixels the width of the designated areas over their contours. On the other hand, the thinning processing refers to one to reduce by a predetermined number of the pixels the width of the designated areas as against the thickening processing. The thickening and the thinning processing methods are disclosed in Japanese Patent Laying Open Gazette No. No.1-181279 (1989) and Research Reports No. 835, p.25-64 from Electrotechnical Laboratories, Ibaragi, Japan (September, 1983).
(2) The objective areas may be designated using a designation graphic other than the segment S. Fig. 15 shows the condition to designate objective areas using a dotted rectangle Q. An operator only designates the positions of two apexes Qₐ and Q_{b} on one diagonal of the rectangle Q on the color monitor 10. The rectangle Q is automatically generated on the color monitor 10 from the positions of the apexes Qₐ and Q_{b}. In this case, among the areas at least a part of which exists inside the rectangle Q, the areas with a color designated as objective one (for example, black) are specified as the designated areas. In the example of Fig. 15, the black areas of the letters A and B are specified as the designated areas.
(3) In the above embodiments, a monochrome layout copy image is divided into black areas and white areas. However, the present invention can be also applied to the case where the layout copy image is a chromatic image having different color areas and the processing is performed in order to re-arrange the areas and colors therein.
(4) The divided areas may be provided with respective area codes instead of the color numbers.
(5) The coloring process or the image-extraction process may be applied to the areas other than the object areas which are designated by the designation graphic, e.g., the segment S. The areas-to-be-processed may be switched between the objective areas and the other areas with the mouse 5 and a menu displayed on the color monitor 10. As explained above, according to the present invention, since parts of a plurality of image areas within a given image are designated at once using a designation graphic, many image areas can easily designated, so that the image areas of either of the designated areas or other than the designated areas can be processed at a high speed.

## Claims

1. A method of selectively applying a predetermined image processing to respective areas (R) of an image, comprising the steps of;
a) defining said respective areas (R) on said image and providing initial colors to said respective areas;
b) displaying said image on a display means (10);
c) designating one of said initial colors as an objective initial color;
d) arbitrarily designating a graphic (S) on said image displayed, said graphic being a one-dimensional or two-dimensional graphic;
characterized by
e) determining, among said respective areas (R), areas which overlap with said graphic and which have said objective initial color, to obtain objective areas; and
f) applying said image processing to areas-to-be-processed which are either of said objective areas or areas other than said objective areas.

2. The method of claim 1, wherein the step a) includes the steps of;
a-1) providing a predetermined window (W) on said image; and
a-2) moving said window (W) on said image to allocate area codes (Nₛ) to said respective areas; and
the step e) includes the step of;
e-1) combining the determination of objective areas by graphical means and the specification of said objective areas through said area codes (Nₛ).

3. The method of claim 2, wherein the step a-2) includes the step of;
allocating said area codes (Nₛ) to said respective areas while permitting a plurality of area codes to be allocated to a same area;
generating a table (IST) representing said plurality of area codes (Nₛ) allocated to a same area; and
rewriting said plurality of area codes (Nₛ) to a single code.

4. The method of claim 1, wherein the step d) includes the steps of;
d-1) designating a plurality of points (Sₐ, S_{b}) on said image; and
d-2) generating one or more lines interconnecting said plurality of points (Sₐ, S_{b}) to obtain said graphic (S).

5. The method of claim 4, wherein the step d-2) includes the step of;
generating a segment (S) interconnecting said plurality of points (Sₐ, S_{b}).

6. The method of claim 4, wherein the step d-2) includes the step of;
generating a two-dimensional graphic (Q) having apexes (Qₐ, Q_{b}) at said plurality of said points.

7. The method of claim 1, wherein the step e) includes the steps of;
e-1) calculating crossing points (P) between said graphic and said respective areas (R); and
e-2) determining areas in which said crossing points are located to thereby determine said objective areas.

8. The method of claim 7, wherein the step e-1) includes the step of;
calculating all the crossing points (P) between said graphic (S) and said respective areas (R).

9. The method of claim 7, wherein the step e-1) includes the step of;
calculating part of the crossing points (P) between said graphic and said respective areas (R).

10. The method of claim 9, wherein said part of the crossing points (P) are calculated every predetermined number of pixels along respective element lines of said graphic (S), said predetermined number of pixels being smaller than a known minimum size of said respective areas (R).

11. The method of claim 1, wherein the step f) includes the steps of;
f-1) designating a color; and
f-2) providing said color to said areas-to-be-processed.

12. The method of claim 11, further comprising the step of;
g) repeating the steps d) through f) while changing a position of said graphic on said image and changing said color, to thereby allocate a plurality of colors to said respective areas (R).

13. The method of claim 12, wherein the step a) includes the step of;
a-1) allocating area codes (Nₛ) to said respective areas (R);
and
the step f-2) includes the step of;
changing area codes (Nₛ) of said objective areas to a color code representing said color.

14. The method of claim 1, wherein the step f) includes the step of;
f-1) extracting said areas-to-be-processed from said respective areas (R) to thereby obtain an extracted image.

15. The method of claim 14, further comprising the steps of;
g) repeating the steps c) through f) while changing a position of said graphic on said image to thereby obtain a plurality of extracted images; and
h) combining said plurality of said extracted images with each other to obtain a combined extracted image.

16. The method of claim 15, wherein
said respective areas (R) are composed of image areas and pinhole areas (Fig. 13A); and
the step d) includes the step of;
d-1) designating said graphic so that said pinhole areas do not overlap with said graphic.

17. An apparatus for selectively applying a predetermined image processing to respective areas (R) of an image, said respective areas being provided with initial colors, said apparatus comprising;
a) means (10) for displaying said image;
b) means for inputting positional data representing a designated position on said image;
c) means for designating one of said initial colors as an objective initial color;
d) means for generating a one-dimensional or two-dimensional graphic (S, Q) at said position on said image;
characterized by
e) means for detecting, among said respective areas (R), areas which overlap with said graphic (S, Q) and have said objective initial color to obtain objective areas; and
f) means for applying said image processing to areas-to-be-processed which are either of said objective areas or areas other than said designated areas.

18. The apparatus of claim 17, wherein the means f) includes;
f-1) means for providing a color code representing said color to said areas-to-be-processed.

19. The apparatus of claim 18, further comprising;
g) means for coloring said areas-to-be-processed on said display means (10) in accordance with said color code.

20. The apparatus of claim 17, wherein the means f) includes;
f-1) means for extracting said areas-to-be-processed from said respective areas to obtain an extracted image.

## Patentansprüche

1. Verfahren zum ausgewählten Anwenden einer vorbestimmten Bildbearbeitung auf jeweilige Gebiete (R) eines Bildes, mit den Schritten:
a) Definieren der jeweiligen Gebiete (R) auf dem Bild und Versehen der jeweiligen Gebiete mit Anfangsfarben;
b) Anzeigen des Bildes auf einer Anzeigeeinrichtung (10);
c) Bezeichnen einer der Anfangsfarben als eine Ziel-Anfangsfarbe;
d) Beliebiges Bezeichnen einer Graphik (S) auf dem angezeigten Bild, wobei die Graphik eine eindimensionale oder zweidimensionale Graphik ist;
gekennzeichnet durch
e) Festlegen, unter den jeweiligen Gebieten (R), von Gebieten, die sich mit der Graphik überlappen und die die Ziel-Anfangsfarbe haben, um Ziel-Gebiete zu erhalten; und
f) Anwenden der Bildbearbeitung auf zu bearbeitende Gebiete, die entweder die Ziel-Gebiete oder andere Gebiete als die Ziel-Gebiete sind.

2. Verfahren nach Anspruch 1, bei dem der Schritt a) den Schritt umfaßt:
a-1) Bereitstellen eines vorbestimmten Fensters (W) auf dem Bild; und
a-2) Bewegen des Fensters (W) auf dem Bild, um den jeweiligen Gebieten Gebietscodes (Nₛ) zuzuweisen; und
der Schritt e) den Schritt umfaßt:
e-1) Kombinieren des Festlegens der Ziel-Gebiete durch graphische Einrichtungen und der Spezifikation der Ziel-Gebiete durch die Gebietscodes (Nₛ).

3. Verfahren nach Anspruch 2, bei dem der Schritt a-2) den Schritt umfaßt:
Zuweisen der Gebietscodes (Nₛ) an jeweiligen Bereiche, wobei erlaubt ist, daß eine Vielzahl von Gebietscodes dem identischen Gebiet zugewiesen wird;
Erzeugen einer Tabelle (IST), die die Vielzahl von Gebietscodes (Nₛ) darstellt, welche einem identischen Gebiet zugewiesen sind; und
Neuschreiben der Vielzahl von Gebietscodes (Nₛ) zu einem einzelnen Code.

4. Verfahren nach Anspruch 1, bei dem der Schritt d) die Schritte umfaßt:
d-1) Bezeichnen einer Vielzahl von Punkten (Sₐ, S_{b}) auf dem Bild; und
d-2) Erzeugen einer oder mehrerer Linien, die die Vielzahl der Punkte (Sₐ, S_{b}) miteinander verbindet/verbinden, um die Graphik S zu erhalten.

5. Verfahren nach Anspruch 4, bei dem der Schritt d-2) den Schritt umfaßt:
Erzeugen eines Segmentes (S), das die Vielzahl der Punkte (Sₐ, S_{b}) untereinander verbindet.

6. Verfahren nach Anspruch 4, bei dem der Schritt d-2) den Schritt umfaßt:
Erzeugen einer zweidimensionalen Graphik (Q) mit Spitzen (Qₐ, Q_{b}) an der Vielzahl der Punkte.

7. Verfahren nach Anspruch 1, bei dem der Schritt e) die Schritte umfaßt:
e-1) Berechnen von Schnittpunkten (P) zwischen der Graphik und den jeweiligen Gebieten (R); und
e-2) Festlegen von Gebieten, in denen sich die Schnittpunkte befinden, um somit die Ziel-Gebiete festzulegen.

8. Verfahren nach Anspruch 7, bei dem der Schritt e-1) den Schritt umfaßt:
Berechnen aller Schnittpunkte (P) zwischen der Graphik (S) und den jeweiligen Gebieten (R).

9. Verfahren nach Anspruch 7, bei dem der Schritt e-1) den Schritt umfaßt:
Berechnen eines Teils der Schnittpunkte (P) zwischen der Graphik und den jeweiligen Gebieten (R).

10. Verfahren nach Anspruch 9, bei dem der Teil der Schnittpunkte (P) jede vorbestimmte Anzahl von Pixeln entlang jeweiliger Elementlinien der Graphik (S) berechnet wird, wobei die vorbestimmte Anzahl von Pixeln kleiner ist als eine bekannte minimale Größe der jeweiligen Gebiete (R).

11. Verfahren nach Anspruch 1, bei dem der Schritt f) die Schritte umfaßt:
f-1) Bezeichnen einer Farbe; und
f-2) Bereitstellen der Farbe für die zu bearbeitenden Gebiete.

12. Verfahren nach Anspruch 11, das weiter den Schritt aufweist:
g) Wiederholen der Schritte d) bis f), wobei eine Position der Graphik auf dem Bild geändert wird und die Farbe geändert wird, um somit eine Vielzahl von Farben den jeweiligen Gebieten (R) zuzuweisen.

13. Verfahren nach Anspruch 12, bei dem der Schritt a) den Schritt umfaßt:
a-1) Zuweisen von Gebietscodes (Nₛ) an jeweilige Gebiete (R); und
der Schritt f-2) den Schritt umfaßt:
Ändern von Gebietscodes (Nₛ) der Ziel-Gebiete in einen Farbcode, der die Farbe darstellt.

14. Verfahren nach Anspruch 1, bei dem der Schritt f) den Schritt umfaßt:
f-1) Herausziehen der zu bearbeitenden Gebiete aus den jeweiligen Gebieten (R), um dadurch ein herausgezogenes Bild zu erhalten.

15. Verfahren nach Anspruch 14, das weiterhin die Schritte aufweist:
g) Wiederholen der Schritte c) bis f), wobei eine Position der Graphik auf dem Bild geändert wird, um dadurch eine Vielzahl von herausgezogenen Bildern zu erhalten; und
h) Kombinieren der Vielzahl der herausgezogenen Bilder miteinander, um ein kombiniertes herausgezogenes Bild zu erhalten.

16. Verfahren nach Anspruch 15, bei dem
die jeweiligen Gebiete (R) aus Bildgebieten und Punktdefektgebieten (Figur 13A) zusammengesetzt sind; und
der Schritt d) den Schritt umfaßt:
d-1) Festlegen der Graphik derart, daß die Punktdefektgebiete nicht mit der Graphik überlappen.

17. Vorrichtung zum ausgewählten Anwenden einer vorbestimmten Bildbearbeitung auf jeweilige Gebiete (R) eines Bildes, wobei die jeweiligen Gebiete mit Anfangsfarben versehen sind, wobei die Vorrichtung aufweist:
a) eine Einrichtung (10) zum Anzeigen des Bildes;
b) eine Einrichtung zum Eingeben von Positionsdaten, die eine bezeichnete Position auf dem Bild darstellen;
c) eine Einrichtung zum Bezeichnen einer der Anfangsfarben als eine Ziel-Anfangsfarbe;
d) eine Einrichtung zum Erzeugen einer eindimensionalen oder zweidimensionalen Graphik (S, Q) an der Position auf dem Bild;
gekennzeichnet durch
e) eine Einrichtung zum Erfassen, unter den jeweiligen Gebieten (R), von Gebieten, die mit der Graphik (S, Q) überlappen und die Ziel-Anfangsfarbe haben, um Ziel-Gebiete zu erhalten; und
f) eine Einrichtung zum Anwenden der Bildbearbeitung auf zu bearbeitende Gebiete, die entweder die Ziel-Gebiete oder Gebiete, die andere als die bezeichneten Gebiete sind, sind.

18. Vorrichtung nach Anspruch 17, bei der die Einrichtung f) enthält:
f-1) eine Einrichtung zum Bereitstellen eines Farbcodes, der die Farbe für die zu bearbeitenden Gebiete darstellt.

19. Vorrichtung nach Anspruch 18, die weiter aufweist:
g) eine Einrichtung zum Färben der zu bearbeitenden Gebiete auf der Anzeigeeinrichtung (10) entsprechend dem Farbcode.

20. Vorrichtung nach Anspruch 17, bei der die Einrichtung f) umfaßt:
f-1) eine Einrichtung zum Herausziehen der zu bearbeitenden Gebiete aus den jeweiligen Gebieten, um ein herausgezogenes Bild zu erhalten.

## Revendications

1. Procédé pour appliquer sélectivement un traitement d'image prédéterminé à des zones respectives (R) d'une image, comportant les étapes consistant à :
a) définir lesdites zones respectives (R) de ladite image et fournir des couleurs initiales auxdites zones respectives,
b) afficher ladite image sur des moyens d'affichage (10),
c) désigner une desdites couleurs initiales en tant que couleur initiale formant objectif,
d) désigner arbitrairement un graphique (S) sur ladite image affichée, ledit graphique étant un graphique unidimensionnel ou bidimensionnel,
caractérisé en ce qu'il comporte de plus les étapes consistant à
e) déterminer, parmi lesdites zones respectives (R), des zones qui recouvrent ledit graphique et qui ont ladite couleur initiale formant objectif pour obtenir des zones formant objectif, et
f) appliquer ledit traitement d'image aux zones destinées à être traitées qui sont l'une ou l'autre parmi lesdites zones formant objectif ou les zones autres que lesdites zones formant objectif.

2. Procédé selon la revendication 1, dans lequel l'étape a) comporte les étapes consistant à :
a-1) fournir une fenêtre prédéterminée (W) sur ladite image, et
a-2) déplacer ladite fenêtre (W) sur ladite image pour attribuer des codes de zone (Nₛ) auxdites zones respectives, et
l'étape e) comporte l'étape consistant à :
e-1) combiner la détermination de zones formant objectif par des moyens graphiques et la spécification desdites zones formant objectif par l'intermédiaire desdits codes de zone (Nₛ).

3. Procédé selon la revendication 2, dans lequel l'étape a-2) comporte l'étape consistant à :
attribuer lesdits codes de zone (Nₛ) auxdites zones respectives tout en permettant que plusieurs codes de zone soient attribués à une même zone,
produire une table (IST) représentant lesdits plusieurs codes de zone (Nₛ) attribués à une même zone, et
réécrire lesdits plusieurs codes de zone (Nₛ) sous forme d'un seul code.

4. Procédé selon la revendication 1, dans lequel l'étape d) comporte les étapes consistant à :
d-1) désigner plusieurs points (Sₐ, S_{b}) sur ladite image, et
d-2) produire une ou plusieurs lignes reliant lesdits plusieurs points (Sₐ, S_{b}) pour obtenir ledit graphique (S).

5. Procédé selon la revendication 4, dans lequel l'étape d-2) comporte l'étape consistant à :
engendrer un segment (S) reliant lesdits plusieurs points (Sₐ, S_{b}).

6. Procédé selon la revendication 4, dans lequel l'étape d-2) comporte l'étape consistant à :
produire un graphique bidimensionnel (Q) ayant des sommets (Qₐ, Q_{b}) situés au niveau desdits plusieurs points.

7. Procédé selon la revendication 1, dans lequel l'étape e) comporte les étapes consistant à :
e-1) calculer des points de croisement (P) entre ledit graphique et lesdites zones respectives (R), et
e-2) déterminer des zones dans lesquelles lesdits points de croisement sont situés pour déterminer ainsi lesdites zones formant objectif.

8. Procédé selon la revendication 7, dans lequel l'étape e-1) comporte l'étape consistant à :
calculer tous les points de croisement (P) entre ledit graphique (S) et lesdites zones respectives (R).

9. Procédé selon la revendication 7, dans lequel l'étape e-1) comporte l'étape consistant à :
calculer une partie des points de croisement (P) entre ledit graphique et lesdites zones respectives (R).

10. Procédé selon la revendication 9, dans lequel ladite partie des points de croisement (P) est calculée pour chaque nombre prédéterminé de pixels situés le long de lignes d'éléments respectifs dudit graphique (S), ledit nombre prédéterminé de pixels étant plus petit qu'une taille minimale connue desdites zones respectives (R).

11. Procédé selon la revendication 1, dans lequel l'étape f) comporte les étapes consistant à :
f-1) désigner une couleur, et
f-2) fournir ladite couleur auxdites zones à traiter.

12. Procédé selon la revendication 11, comportant de plus l'étape consistant à :
g) répéter les étapes d) à f) tout en changeant la position dudit graphique sur ladite image et en changeant ladite couleur, pour attribuer ainsi plusieurs couleurs auxdites zones respectives (R).

13. Procédé selon la revendication 12, dans lequel l'étape a) comporte l'étape consistant à :
a-1) attribuer des codes de zones (Nₛ) auxdites zones respectives (R), et
l'étape f-2) comporte l'étape consistant à
changer des codes de zone (Nₛ) desdites zones formant objectif en code de couleur représentant ladite couleur.

14. Procédé selon la revendication 1, dans lequel l'étape f) comporte l'étape consistant à :
f-1) extraire lesdites zones à traiter desdites zones respectives (R) pour obtenir ainsi une image extraite.

15. Procédé selon la revendication 14, comportant de plus les étapes consistant à :
g) répéter les étapes c) à f) tout en changeant la position dudit graphique sur ladite image pour obtenir ainsi plusieurs images extraites, et
h) combiner lesdites plusieurs images extraites les unes avec les autres pour obtenir une image extraite combinée.

16. Procédé selon la revendication 15, dans lequel
lesdites zones respectives (R) sont constituées de zones d'image et de zones de piqûre (voir figure 13A), et
l'étape d) comporte l'étape consistant à :
d-1) désigner ledit graphique de telle sorte que lesdites zones de piqûre ne se superposent pas audit graphique.

17. Dispositif pour appliquer sélectivement un traitement d'image prédéterminé à des zones respectives (R) d'une image, lesdites zones respectives étant munies de couleurs initiales, ledit dispositif comportant :
a) des moyens (10) pour afficher ladite image,
b) des moyens pour introduire des données de position représentant une position désignée sur ladite image,
c) des moyens pour désigner une desdites couleurs initiales en tant que couleur initiale formant objectif,
d) des moyens pour produire un graphique unidimensionnel ou bidimensionnel (S, Q) au niveau de ladite position de ladite image,
caractérisé en ce qu'il comporte :
e) des moyens pour détecter, parmi lesdites zones respectives (R), des zones qui se superposent audit graphique (S, Q) et ont ladite couleur initiale formant objectif pour obtenir des zones formant objectif, et
f) des moyens pour appliquer ledit traitement d'image aux zones à traiter qui sont soit constituées desdites zones formant objectif soit constituées de zones autres que lesdites zones désignées.

18. Dispositif selon la revendication 17, dans lequel les moyens f) comportent :
f-1) des moyens pour fournir un code de couleur représentant ladite couleur auxdites zones à traiter.

19. Dispositif selon la revendication 18, comportant de plus :
g) des moyens pour colorer lesdites zones à traiter situées sur lesdits moyens d'affichage (10) conformément audit code de couleur.

20. Dispositif selon la revendication 17, dans lequel les moyens f) comportent :
f-1) des moyens pour extraire lesdites zones à traiter desdites zones respectives pour obtenir une image extraite.
